# EUROPÄISCHE PATENTSCHRIFT

(11) **EP 3 070 438 B1**
(45) Veröffentlichungstag und Bekanntmachung des Hinweises auf die Patenterteilung: **01.02.2017**
(21) Anmeldenummer: 15159913.1
(22) Anmeldetag: 19.03.2015
(51) Int. Cl.: G01D 11/24, F15B 15/28

(54) **SENSORGEHÄUSE**
SENSOR CASING
BOÎTIER DE CAPTEUR

(43) Veröffentlichungstag der Anmeldung: 21.09.2016
(73) Patentinhaber: SICK AG, 79183 Waldkirch (DE)
(72) Erfinder: Selinger, Andreas, 79341 Kenzingen (DE)
(74) Vertreter: Rieger, Daniel-Stephan

(56) Entgegenhaltungen:
- EP-B1- 1 586 868
- DE-A1-102011 006 371
- DE-U1- 29 518 539
- DE-U1-202006 010 289
- DE-U1-202008 007 384

## Beschreibung

Die vorliegende Erfindung betrifft ein Sensorgehäuse mit mindestens einem Sensorelement.

Sensoren bzw. Magnetfeldsensoren haben sich zur genauen Positions- oder Wegmessung durch berührungsloses Erfassen einer Stellung von z. B. Pneumatik- oder Hydraulikkolben innerhalb eines Arbeitszylinders bewährt. Zur Halterung der Sensoren sind an den Außenflächen eines Gehäuses des Arbeitszylinders Führungsnuten angebracht, in welchen die Magnetfeldsensoren axial verstellbar gehalten sind. In einer gewünschten Position in Längsrichtung der Nut können die Sensoren über geeignete Mittel, beispielsweise Schrauben, arretiert werden.

Die EP 1 586 868 B1 betrifft eine Positionssensoranordnung mit mehreren in einer Reihe angeordneten, magnetfeldsensitiven Sensoren, insbesondere Hall-Sensoren, wobei ein mit einem Permanentmagneten versehenes bewegbares Element parallel zur Längsrichtung der Sensorreihe bewegbar ist, und wobei die Sensoren an eine Signalaufbereitungseinrichtung und/oder Auswerteeinrichtung angeschlossen sind zur Erfassung der Position des bewegbaren Elements.

Sensorgehäuse mit einem leistenartigen Gehäusevorsprung, z.B. zur Befestigung in einer Montagenute, sind aus DE102011006371, DE202008007384U oder DE202006010289U bekannt.

Eine Aufgabe der Erfindung besteht darin, ein Gehäuse bereitzustellen, welches aus möglichst wenigen Bauteilen besteht, welches eine einfache Montage einer Leiterplatte zulässt und welches eine hohe Dichtigkeit aufweist. Weiter soll das Gehäuse selbst einfach montierbar sein, insbesondere in C-Nuten befestigbar sein.

Die Aufgabe wird gemäß Anspruch 1 gelöst durch ein Sensorgehäuse mit mindestens einem Sensorelement, wobei das Sensorgehäuse einen leistenartigen Gehäusevorsprung besitzt, der zur Aufnahme in einer längs eines Linearantrieb-Gehäuses verlaufenden Nut vorgesehen ist, wobei mindestens eine langgestreckte leistenartige Leiterplatte in diesem Gehäusevorsprung in dessen Längsrichtung angeordnet ist, wobei mindestens ein Gehäusedeckel an einer Längsseite des Sensorgehäuses und an der Längsseite des Gehäusevorsprungs angeordnet ist.

Gemäß der Erfindung besteht das Gehäuse hauptsächlich aus lediglich zwei Komponenten, nämlich dem Sensorgehäuse und dem Gehäusedeckel.

Bei dem erfindungsgemäßen Gehäuse erfolgt die Montage der Leiterplatte mit dem wenigstens einen Sensorelement nicht von einer Stirnseite, sondern von einer Längsseite. Gerade bei längeren Leiterplatten kann das Einführen der Leiterplatte von einer Stirnseite zu Problemen führen, aufgrund von Maß-, Form- und Lagetoleranzen. Durch die Öffnung in dem Gehäuse, an der der Gehäusedeckel angeordnet wird, lässt sich die mindestens eine Leiterplatte einfach in das Gehäuse einfügen.

Weiter ist der Gehäusevorsprung schmaler als die Nutöffnung in einem Linearantrieb-Gehäuse. Dadurch kann das Sensorgehäuse mit dem Gehäusevorsprung direkt von oben in die Nut eingeführt werden. Ein längsseitiges Einschieben in die Nut ist nicht notwendig. Die Montage des Sensors in die Nut von oben, quer zur Längsrichtung der Nut wird auch 'Drop-In' Montage genannt.

Das Sensorgehäuse besteht dabei vorzugsweise aus Kunststoff. Das Sensorgehäuse ist vorzugsweise ein Kunststoffspritzling. Auch der Gehäusedeckel ist dabei vorzugsweise aus Kunststoff und besonders bevorzugt ein Kunststoffspritzling. Der Kunststoff des Sensorgehäuses und des Gehäusedeckels enthält bevorzugt Kohlefasern oder Glasfasern.

In Weiterbildung der Erfindung weist der Gehäusevorsprung ebene Seitenflächen auf, so dass kein Hinterschnitt gebildet ist. Dadurch kann der Sensor auch sehr einfach wieder aus einer Nut entfernt werden, da sich keine Teile des Gehäusevorsprungs in Hinterschnitten der Nut verhaken können. Bevorzugt ist die Breite des Gehäusevorsprungs geringfügig kleiner als die Breite der Nut. Dadurch kann der Gehäusevorsprung ohne großes Spiel in die Nut eingeführt werden und darin befestigt werden. Eine Befestigung kann beispielsweise mit Klemmschrauben erfolgen.

In einer bevorzugten Ausführungsform der Erfindung erstreckt sich der Gehäusedeckel nahezu über die gesamte Sensorgehäuselänge. Dadurch kann eine Leiterplatte, die sich ebenfalls nahezu über die gesamte Gehäuselänge erstreckt, parallel zu der Sensorgehäuseöffnung in das Sensorgehäuse eingebaut bzw. montiert werden. Dadurch kann die Leiterplatte einfach automatisiert in das Sensorgehäuse eingeführt werden, so dass eine preiswerte Sensormontage ermöglicht wird.

In Weiterbildung der Erfindung sind die Sensorelemente Hallelemente. Hallelemente haben den Vorteil, dass diese sehr kleine Abmessungen aufweisen, wodurch eine Vielzahl von Hallelementen in einer Reihe angeordnet werden können, wodurch ein hochauflösender Wegsensor gebildet werden kann.

In Weiterbildung der Erfindung ist der Gehäusedeckel einstückig mittels eines Filmscharniers mit dem Sensorgehäuse verbunden. Da durch das Filmscharnier ein einstückiges Teil gebildet ist muss bei der Montage des Sensors kein zusätzlich getrennter Gehäusedeckel verarbeitet werden. Vielmehr ist der Gehäusedeckel während der Montage unverlierbar mit dem Sensorgehäuse verbunden.

In einer bevorzugten Ausführungsform weist das Sensorgehäuse mechanische Verstrebungen auf, die im Innern des Sensorgehäuses angeordnet sind. Durch die mechanischen Verstrebungen bzw. Versteifungselemente wird die Stabilität des Gehäuses erhöht. Die Verstrebungen sind dabei einstückig mit dem Sensorgehäuse verbunden. Die Verstrebungen weisen beispielsweise eine kreuzförmige Form auf.

In einer weiter bevorzugten Ausführungsform weist der Gehäusedeckel an der Innenseite mechanische Verstrebungen auf. Durch die mechanischen Verstrebungen bzw. Versteifungselemente wird die Stabilität des Gehäusedeckels erhöht. Die Verstrebungen sind dabei einstückig mit dem Gehäusedeckel verbunden. Die Verstrebungen weisen beispielsweise eine kreuzförmige Form auf.

In Weiterbildung der Erfindung ist zwischen Sensorgehäuse und Gehäusedeckel eine umlaufende Nut angeordnet, in der eine umlaufende Dichtung angeordnet ist. Dadurch wird eine dichte Verbindung zwischen Sensorgehäuse und Gehäusedeckel gebildet. Die umlaufende Dichtung ist beispielsweise durch einen Dichtungsring oder eine Formdichtung gebildet.

Alternativ kann in die Nut Kleber eingebracht werden, wodurch das Sensorgehäuse und der Gehäusedeckel durch eine Klebung miteinander verbunden sind.

In Weiterbildung der Erfindung ist zwischen Sensorgehäuse und Gehäusedeckel wenigstens eine Stiftverbindung vorgesehen. Durch die Stiftverbindungen wird eine Steifigkeit und Stabilität zwischen Sensorgehäuse und Gehäusedeckel weiter erhöht. Die Stiftverbindungen sind dabei bevorzugt in gleichmäßigen Abständen entlang des Gehäusedeckels bzw. entlang des Sensorgehäuses angeordnet. Beispielsweise sind die Stiftverbindungen jeweils zwischen den Verstrebungen angeordnet.

In Weiterbildung ist das Sensorgehäuse und der Gehäusedeckel mittels Schweißen, Kleben, Einpressen und/oder Vergießen miteinander verbunden. Beim Schweißen kann es sich beispielsweise um Ultraschallschweißen handeln. Weiter kann der Deckel beispielsweise mittels eines Klebers befestigt werden, der mittels Ultraviolettlicht gehärtet wird. Dadurch kann der Zeitpunkt der Fixierung sehr exakt vorgenommen werden. Ein Einpressen hat den Vorteil, dass keine zusätzlichen Befestigungskomponenten notwendig werden. Kleben und Vergießen haben dabei den Vorteil, dass eine sehr robuste dichte Verbindung zwischen Sensorgehäuse und Gehäusedeckel erreicht wird.

In Weiterbildung der Erfindung sind in dem Gehäuse kapazitive Bedienungselemente angeordnet. Dadurch, dass die Sensorgehäusewand bzw. die Gehäusedeckelwand sehr dünn ausgeführt werden können, beispielsweise kleiner als 2 mm Wandstärke, insbesondere kleiner als 1 mm Wandstärke, können direkt hinter der Sensorgehäusewand bzw. der Gehäusedeckelwand kapazitive Bedienungselemente angeordnet werden. Dadurch brauchen keine zusätzlichen Dichtungen für die Bedienelemente vorgesehen werden. An dem Gehäuse brauchen auch keine zusätzlichen Löcher für Bedienelemente vorgesehen werden.

In Weiterbildung weist das Sensorgehäuse an einem stirnseitigen Ende einen elektrischen Anschluss, insbesondere einen Kabelanschluss oder einen Stecker auf. Dadurch kann der Sensor mit Energie versorgt werden und die Ausgangssignale einer Steuerung zugeführt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sensorgehäuse mit mindestens einem Sensorelement;
- Figur 2: ein Sensorgehäuse mit montiertem Gehäusedeckel;
- Figur 3: einen Sensor mit Blick auf eine Stirnseite mit dem elektrischen Anschluss;
- Figur 4: ein Sensorgehäuse aus einer anderen Perspektive gegenüber Figur 1;
- Figur 5: ein Sensorgehäuse mit Blickrichtung auf eine Stirnseite;
- Figur 6: eine Ansicht in das Sensorgehäuse ohne Gehäusedeckel;
- Figur 7: einen vergrößerten Ausschnitt des Sensorgehäuses aus Figur 6.

In den nachfolgenden Figuren sind identische Teile mit identischen Bezugszeichen versehen.

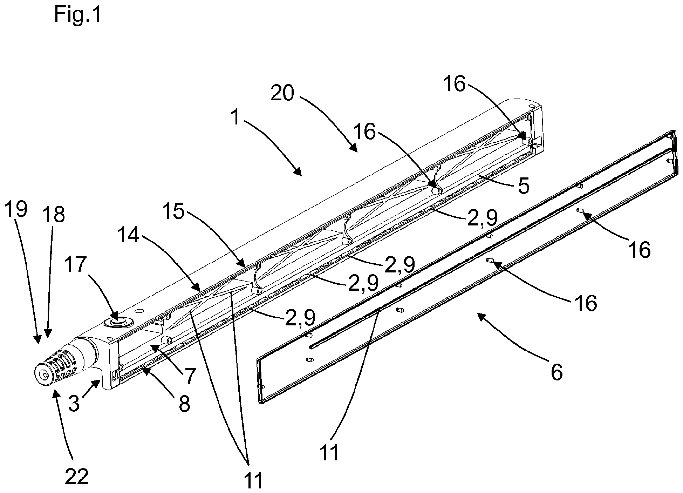

Figur 1 zeigt ein Sensorgehäuse 1 mit mindestens einem Sensorelement 2, wobei das Sensorgehäuse 1 einen leistenartigen Gehäusevorsprung 3 besitzt, der zur Aufnahme in einer längs eines Linearantrieb-Gehäuses verlaufenden Nut vorgesehen ist, wobei mindestens eine langgestreckte leistenartige Leiterplatte 5 in diesem Gehäusevorsprung 3 in dessen Längsrichtung angeordnet ist, wobei ein einziger Gehäusedeckel 6 an einer Längsseite 7 des Sensorgehäuses 1 und an der Längsseite 8 des Gehäusevorsprungs angeordnet ist.

Gemäß Figur 1 besteht das Gehäuse hauptsächlich aus lediglich zwei Komponenten, nämlich dem Sensorgehäuse 1 und dem Gehäusedeckel 6. Das Sensorgehäuse 1 weist einen L-förmigen Sensorgehäusequerschnitt auf.

Bei dem erfindungsgemäßen Sensorgehäuse 1 erfolgt die Montage der Leiterplatte 5 nicht von einer Stirnseite, sondern von einer Längsseite 8. Durch die Öffnung in dem Sensorgehäuse 1, an der der Gehäusedeckel 6 angeordnet wird, lässt sich die mindestens eine leistenartige Leiterplatte 5 einfach in das Sensorgehäuse 1 einfügen und befestigen.

Weiter ist der Gehäusevorsprung 3 schmaler als eine Nutöffnung in einem Linearantrieb-Gehäuse. Dadurch kann das Sensorgehäuse 1 mit dem Gehäusevorsprung 3 direkt von oben in eine Nut eingeführt werden.

Das Sensorgehäuse 1 und der Gehäusedeckel 6 bestehen dabei vorzugsweise aus Kunststoff.

Der Gehäusevorsprung 3 weist ebene Seitenflächen auf, so dass kein Hinterschnitt gebildet ist. Dadurch kann der Sensor 20 bzw. das Sensorgehäuse 1 auch sehr einfach in eine Nut eingeführt und wieder aus einer Nut entfernt werden, da sich keine Teile des Gehäusevorsprungs 3 in Hinterschnitten der Nut verhaken können. Dabei ist die Breite des Gehäusevorsprungs 3 geringfügig kleiner als die Breite der Nut. Eine Befestigung des Sensorgehäuses 1 kann beispielsweise mit Klemmschrauben erfolgen.

Gemäß Figur 1 erstreckt sich der Gehäusedeckel 6 nahezu über die gesamte Sensorgehäuselänge. Die leistenartige Leiterplatte 5 mit den Sensorelementen 2 erstreckt sich ebenfalls nahezu über die gesamte Sensorgehäuselänge parallel zu der Sensorgehäuseöffnung. Dadurch kann die Leiterplatte 5 einfach automatisiert in das Sensorgehäuse 1 eingeführt werden.

Die Sensorelemente 2 sind vorzugsweise Hallelemente 9.

Optional ist der Gehäusedeckel 6 einstückig mittels eines Filmscharniers mit dem Sensorgehäuse 1 verbunden.

Gemäß Figur 1 weist das Sensorgehäuse 1 mechanische Verstrebungen 11 bzw. Versteifungen auf, die im Innern des Sensorgehäuses 1 angeordnet sind. Die Verstrebungen 11 sind dabei einstückig mit dem Sensorgehäuse 1 verbunden. Die Verstrebungen 11 weisen beispielsweise eine kreuzförmige Form auf.

Auch der Gehäusedeckel 6 weist an der Innenseite mechanische Verstrebungen 11 auf. Der Gehäusedeckel 6 ist dabei in Figur 1 transparent dargestellt. D. h. die Verstrebung 11 ist durch den Gehäusedeckel 6 sichtbar. Die Verstrebungen 11 sind dabei einstückig mit dem Gehäusedeckel 6 verbunden. Die Verstrebungen 11 weisen beispielsweise eine linienförmige oder eine kreuzförmige Form auf.

Optional ist zwischen Sensorgehäuse 1 und Gehäusedeckel 6 eine umlaufende Nut 14 angeordnet, in der eine umlaufende Dichtung 15 angeordnet ist. Die umlaufende Dichtung 15 ist beispielsweise durch einen Dichtungsring oder eine Formdichtung gebildet. Alternativ kann in die Nut Kleber eingebracht werden, wodurch das Sensorgehäuse und der Gehäusedeckel durch eine Klebung miteinander verbunden sind.

Optional ist zwischen Sensorgehäuse 1 und Gehäusedeckel 6 wenigstens eine Stiftverbindung 16 vorgesehen. Die Stiftverbindungen 16 sind dabei bevorzugt in gleichmäßigen Abständen entlang des Gehäusedeckels 6 bzw. entlang des Sensorgehäuses 1 angeordnet. Beispielsweise sind die Stiftverbindungen 16 jeweils zwischen den mechanischen Verstrebungen 11 angeordnet.

Das Sensorgehäuse 1 und der Gehäusedeckel 6 sind mittels Schweißen, Kleben, Einpressen und/oder Vergießen miteinander verbunden. Beim Schweißen kann es sich beispielsweise um Laser-Ultraschallschweißen handeln. Weiter kann der Gehäusedeckel 6 beispielsweise mittels eines Klebers befestigt werden, der mittels Ultraviolettlicht gehärtet wird.

Optional sind in dem Sensorgehäuse 1 kapazitive Bedienungselemente 17 angeordnet. Dadurch, dass die Sensorgehäusewand bzw. die Gehäusedeckelwand sehr dünn ausgeführt werden können, beispielsweise kleiner als 2mm Wandstärke, insbesondere kleiner als 1 mm Wandstärke, können direkt hinter der Sensorgehäusewand bzw. der Gehäusedeckelwand kapazitive Bedienungselemente 17 angeordnet werden.

Gemäß Figur 1 weist das Sensorgehäuse 1 an einem stirnseitigen Ende einen elektrischen Anschluss 22, insbesondere Kabelanschluss 18 oder einen Stecker 19 auf.

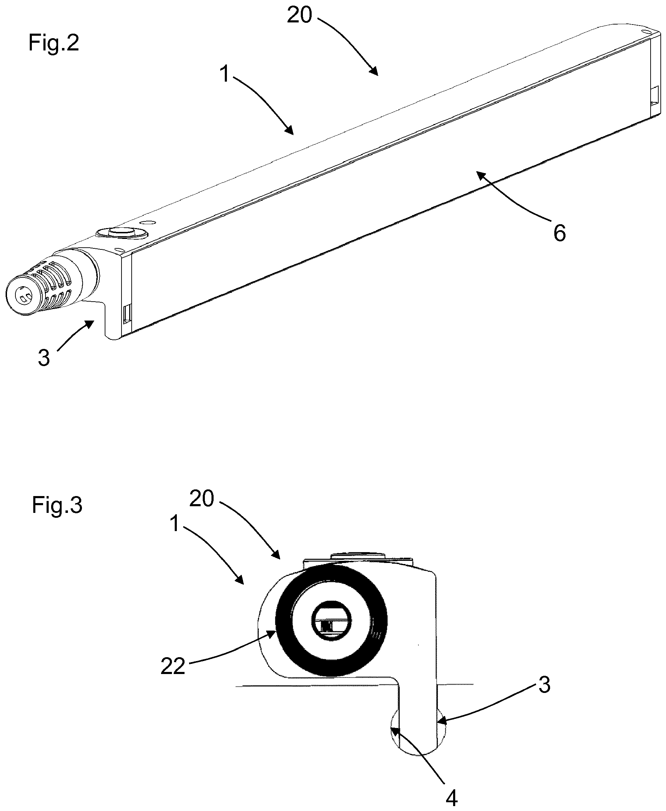

Figur 2 zeigt das Sensorgehäuse 1 mit montiertem Gehäusedeckel 6 nach der Herstellung des Sensors.

Figur 3 zeigt den Sensor 20 mit Blick auf eine Stirnseite mit dem elektrischen Anschluss 22. Der Sensor 20 ist in einer Nut 4 angeordnet. Es handelt sich dabei um eine C-förmige-Nut mit einem Nut-Schaft. Es kann sich dabei jedoch auch um eine T-förmige Nut oder eine andere Nutform handeln. Wichtig ist lediglich, dass der Gehäusevorsprung 3 in die Nut 4 passt und der Sensor 20 in der Nut 4 befestig werden kann. Beispielsweise mit Befestigungsschrauben, die an dem Sensor 20 bzw. dem Sensorgehäuse 1 angeordnet sind.

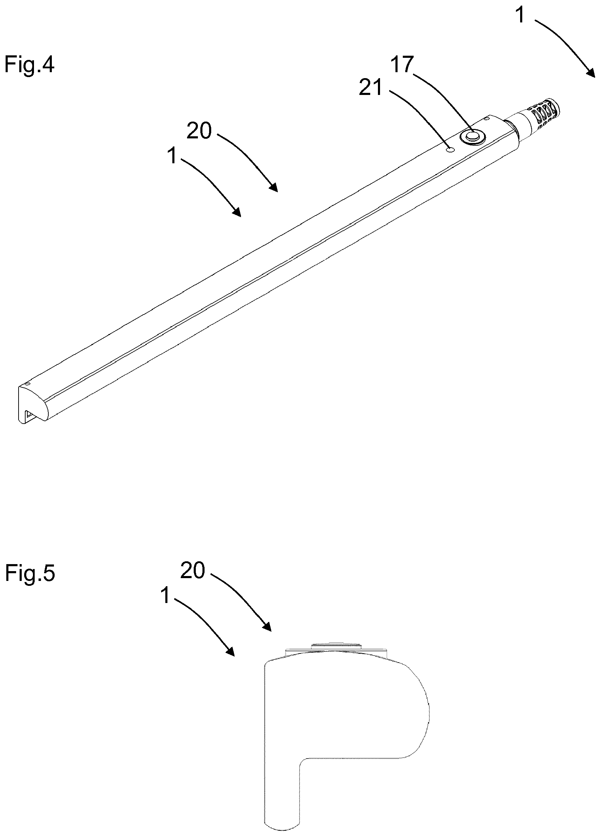

Figur 4 zeigt das Sensorgehäuse 1 aus einer anderen Perspektive gegenüber Figur 1. In Figur 4 ist ein Bedienelement 17 an dem Sensor angeordnet. Weiter ist neben dem Bedienelement ein Anzeigeelement 21, beispielsweise eine Leuchtdiode, angeordnet.

Figur 5 zeigt das Sensorgehäuse 1 mit Blickrichtung auf eine Stirnseite, so dass die L-förmige Querschnittsform des Sensorgehäuses 1 sichtbar ist.

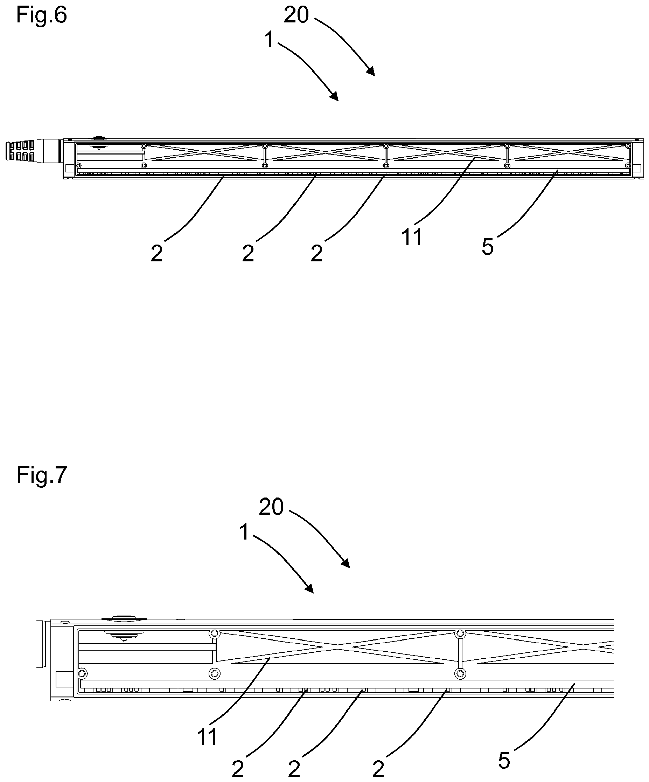

Figur 6 zeigt eine Ansicht in das Sensorgehäuse 1 ohne Gehäusedeckel. Dabei ist die Leiterplatte 5 mit den Sensorelementen 2 dargestellt. Die Sensorelemente 2 sind innerhalb des Gehäusevorsprunges 3 angeordnet, so dass eine möglichst hohe Signalstärke von einem Gebermagneten einer Kolben-Zylinderanordnung detektierbar ist.

Figur 7 zeigt einen vergrößerten Ausschnitt des Sensorgehäuses 1 aus Figur 6.

### Bezugszeichen:

1 Sensorgehäuse
2 Sensorelement
3 Gehäusevorsprung
4 Nut
5 leistenartige Leiterplatte
6 Gehäusedeckel
7 Längsseite des Sensorgehäuses
8 Längsseite des Gehäusevorsprunges
9 Hallelemente
11 mechanische Verstrebungen
13 Innenseite des Gehäusedeckels
14 umlaufende Nut
15 umlaufende Dichtung
16 Stiftverbindung
17 kapazitive Bedienungselemente
18 Kabelanschluss
19 Stecker
20 Sensor
21 Anzeigeelement
22 elektrischer Anschluss

## Patentansprüche

1. Sensorgehäuse mit mindestens einem Sensorelement (2), wobei das Sensorgehäuse (1) einen leistenartigen Gehäusevorsprung (3) besitzt, der zur Aufnahme in einer längs eines Linearantrieb-Gehäuses verlaufenden Nut (4) vorgesehen ist, wobei mindestens eine langgestreckte leistenartige Leiterplatte (5) in diesem Gehäusevorsprung (3) in dessen Längsrichtung angeordnet ist, **dadurch gekennzeichnet, dass** mindestens ein Gehäusedeckel 6 an einer Längsseite (7) des Sensorgehäuses (1) und an der Längsseite (8) des Gehäusevorsprungs (3) angeordnet ist.

2. Sensorgehäuse nach Anspruch 1, **dadurch gekennzeichnet, dass** der Gehäusevorsprung (3) ebene Seitenflächen aufweist, so dass kein Hinterschnitt gebildet ist.

3. Sensorgehäuse nach einem der vorhergehenden Ansprüche, **dadurch gekennzeichnet, dass** der Gehäusedeckel (6) sich nahezu über die gesamte Sensorgehäuselänge erstreckt.

4. Sensorgehäuse nach einem der vorhergehenden Ansprüche, **dadurch gekennzeichnet, dass** die Sensorelemente (2) Hallelemente (9) sind.

5. Sensorgehäuse nach einem der vorhergehenden Ansprüche, **dadurch gekennzeichnet, dass** der Gehäusedeckel (6) einstückig mittels eines Filmscharniers mit dem Sensorgehäuse (1) verbunden ist.

6. Sensorgehäuse nach einem der vorhergehenden Ansprüche, **dadurch gekennzeichnet, dass** das Sensorgehäuse (1) mechanische Verstrebungen (11) aufweist, die im Gehäuseinnern angeordnet sind.

7. Sensorgehäuse nach einem der vorhergehenden Ansprüche, **dadurch gekennzeichnet, dass** der Gehäusedeckel (6) an der Innenseite mechanische Verstrebungen (11) aufweist.

8. Sensorgehäuse nach einem der vorhergehenden Ansprüche, **dadurch gekennzeichnet, dass** zwischen dem Sensorgehäuse (1) und dem Gehäusedeckel (6) eine umlaufende Nut (14) angeordnet ist in der eine umlaufende Dichtung (15) angeordnet ist.

9. Sensorgehäuse nach einem der vorhergehenden Ansprüche, **dadurch gekennzeichnet, dass** zwischen dem Sensorgehäuse (1) und dem Gehäusedeckel (6) wenigstens eine Stiftverbindung (16) vorgesehen ist.

10. Sensorgehäuse nach einem der vorhergehenden Ansprüche, **dadurch gekennzeichnet, dass** das Sensorgehäuse (1) und der Gehäusedeckel (6) mittels Schweißen, Kleben, Einpressen und/oder Vergießen miteinander verbunden sind.

11. Sensorgehäuse nach einem der vorhergehenden Ansprüche, **dadurch gekennzeichnet, dass** in dem Sensorgehäuse (1) kapazitive Bedienungselemente (17) angeordnet sind.

12. Sensorgehäuse nach einem der vorhergehenden Ansprüche, **dadurch gekennzeichnet, dass** das Sensorgehäuse (1) an einem stirnseitigen Ende einen elektrischen Anschluss (22), insbesondere einen Kabelanschluss (18) oder einen Stecker (19) aufweist.

## Claims

1. Sensor housing with at least one sensor element (2), the sensor housing (1) having a strip-like housing projection (3) which is provided for being received in a groove (4) running along a linear drive housing, at least one elongate strip-like printed circuit board (5) is arranged in this housing projection (3) in the longitudinal direction thereof, **characterized in that** at least one housing cover (6) is arranged on a longitudinal side (7) of the sensor housing (1) and on the longitudinal side (8) of the housing projection (3).

2. Sensor housing according to claim 1, **characterized in that** the housing projection (3) has plane side surfaces so that no undercut is formed.

3. Sensor housing according to any preceding claim, **characterized in that** the housing cover (6) extends almost over the entire sensor housing length.

4. Sensor housing according to any preceding claim, **characterized in that** the sensor elements (2) are hall elements (9).

5. Sensor housing according to any preceding claim, **characterized in that** the housing cover (6) is integrally connected to the sensor housing (1) by means of a film hinge.

6. Sensor housing according to any preceding claim, **characterized in that** the sensor housing (1) has mechanical struts (11) arranged inside the housing.

7. Sensor housing according to any preceding claim, **characterized in that** the housing cover (6) has mechanical reinforcements (11) on the inside.

8. Sensor housing according to any preceding claim, **characterized in that** a circumferential groove (14) is arranged between the sensor housing (1) and the housing cover (6), in which a circumferential seal (15) is arranged.

9. Sensor housing according to any preceding claim, **characterized in that** at least one pin connection (16) is provided between the sensor housing (1) and the housing cover (6).

10. Sensor housing according to any preceding claim, **characterized in that** the sensor housing (1) and the housing cover (6) are connected to each other by means of welding, gluing, press-fitting and/or casting.

11. Sensor housing according to any preceding claim, **characterized in that** capacitive operating elements (17) are arranged in the sensor housing (1).

12. Sensor housing according to any preceding claim, wherein the sensor housing (1) has an electrical connection (22), in particular a cable connection (18) or a plug (19), at a front end.

## Revendications

1. Boîtier de capteur avec au moins un élément capteur (2), le boîtier de capteur (1) présentant une saillie de boîtier (3) en forme de bande qui est prévue pour être logée dans une rainure (4) s'étendant le long d'un boîtier d'entraînement linéaire, dans lequel au moins une plaque de circuit imprimée (5) allongée en forme de bande est disposée dans cette saillie du boîtier dans la direction longitudinale, **caractérisée en ce qu'**au moins un couvercle de boîtier (6) est disposé sur un côté longitudinal (7) du capteur (1) et sur le côté longitudinal (8) de la saillie de boîtier (3).

2. Boîtier de capteur selon la revendication 1, **caractérisé en ce que** la saillie de boîtier (3) présente des surfaces latérales planes de sorte qu'aucune contre-dépouille n'est formée.

3. Boîtier de capteur selon l'une des revendications précédentes, **caractérisé en ce que** le couvercle de boîtier (6) s'étend presque sur toute la longueur du boîtier de capteur.

4. Boîtier de capteur selon l'une des revendications précédentes, **caractérisé en ce que** les éléments capteurs (2) sont des éléments de hall (9).

5. Boîtier de capteur selon l'une des revendications précédentes, **caractérisé en ce que** le couvercle de boîtier (6) est relié d'une seule pièce au boîtier de capteur (1) au moyen d'une charnière à film.

6. Boîtier de capteur selon l'une des revendications précédentes, **caractérisé en ce que** le boîtier de capteur (1) comporte des entretoises mécaniques (11) disposées à l'intérieur du boîtier.

7. Boîtier de capteur selon l'une des revendications précédentes, **caractérisé en ce que** le couvercle de boîtier (6) comporte des entretoises mécaniques (11) à l'intérieur.

8. Boîtier de capteur selon l'une des revendications précédentes, **caractérisé en ce qu'**une rainure circonférentielle (14) est disposée entre le boîtier de capteur (1) et le couvercle de boîtier (6), dans lequel un joint circonférentiel (15) est disposé.

9. Boîtier de capteur selon l'une des revendications précédentes, **caractérisé en ce qu'**au moins un raccord de broche (16) est prévu entre le boîtier de capteur (1) et le couvercle de boîtier (6).

10. Boîtier de capteur selon l'une des revendications précédentes, **caractérisé en ce que** le boîtier de capteur (1) et le couvercle de boîtier (6) sont reliés l'un à l'autre par soudage, collage, pressage et/ou coulage.

11. Boîtier de capteur selon l'une des revendications précédentes, **caractérisé en ce que** des éléments de commande capacitifs (17) sont disposés dans le boîtier de capteur (1).

12. Boîtier de capteur selon l'une des revendications précédentes, dans lequel le boîtier de capteur (1) présente à une extrémité avant, une connexion électrique, (22) en particulier une connexion de câble (18) ou une fiche (19).
